## Europäisches Patentamt

## European Patent Office

## Office européen des brevets

(11) Publication number: **0 069 119**
**B1**

## EUROPEAN PATENT SPECIFICATION

(45) Date of publication of patent specification: **10.01.90**

(51) Int. Cl.⁵: **B 01 D 21/26**

(21) Application number: **81901243.6**

(22) Date of filing: **16.04.81**

(86) International application number:
**PCT/US81/00496**

(87) International publication number:
**WO 82/02344 22.07.82 Gazette 82/18**

(54) **FLUID RECOVERY SYSTEM.**

(30) Priority: **15.01.81 PCt/us81/00061**

(43) Date of publication of application:
**12.01.83 Bulletin 83/02**

(45) Publication of the grant of the patent:
**10.01.90 Bulletin 90/02**

(84) Designated Contracting States:
**FR**

(56) References cited:
**DE-A-2 411 076**   **US-A-3 596 769**
**US-A- 453 105**    **US-A-3 679 051**
**US-A-2 360 551**   **US-A-3 743 095**
**US-A-3 456 798**   **US-A-3 764 005**
**US-A-3 528 551**   **US-A-3 840 120**
**US-A-3 529 767**   **US-A-4 168 232**
**US-A-3 540 588**   **US-A-4 265 740**

**CHEMIE INGENIEUR TECHNIK, vol. 48, no. 3,
March 1976, pages 177,187,188, Weinheim, DE;
M. BOHNET: "Trennen nicht mischbarer
Flüssigkeiten"**

(73) Proprietor: **DONALDSON COMPANY, INC.**
**1400 West 94th Street**
**Minneapolis, MN 55431 (US)**

(72) Inventor: **JAHN, Darrel D.**
**Rural Route 2 Box 606**
**Shakopee, MN 55379 (US)**
Inventor: **QUAM, Robert D.**
**269 Pamola Park**
**Millinocket, ME 04462 (US)**
Inventor: **WOLDE-MICHAEL, Girma**
**100 Canabury Court**
**Little Canada, MN 55117 (US)**

(74) Representative: **Rostovanyi, Peter et al**
**AWAPATENT AB Box 5117**
**S-200 71 Malmö (SE)**

Courier Press, Leamington Spa, England.

## Description

The present invention pertains to fluid recovery systems and in particular to industrial recovery systems applying rotational fluid flow principles.

In industries such as the machine-tooling industry, one of the end results of the industrial process is a contaminated fluid mixture. The contaminated mixture typically includes a coolant fluid, generally water-based, lighter liquids such as free and mechanically emulsified oils, solids particulate and other impurities. The valuable component is the coolant fluid which acquires a build-up of free or tramp oil within it from leaks in the lubricating and hydraulic systems of the industry and further contamination from the oil-wetted parts being machined.

Due to stringent government regulations for the disposal of such contaminated mixtures as well as the desire by those in the industries for continued, indefinite use of the coolant fluid in more than one application, efforts have been spent in creating a system capable of recovering the valuable coolant fluid from the contaminated mixture. Not only must the metal solids, foreign objects and other impurities be removed from the mixture, but just as important is the removal of the free and mechanically emulsified oils which have accumulated in the coolant fluid during the machining processes. Also, the removal of oils must occur without resulting damage to the composition of the recovered coolant fluid.

In the prior art, various mechanical skimming devices were used to remove the accumulated oil from the surface of the fluid held in prior art settling tanks.

The combination of a fluid vortex-creating container and a centrifugal separator has been found to eliminate the need for the prior art oil skimming devices from the coolant fluid recovery process. Furthermore, with such a combination the "skimming" process is accomplished in substantially less time and more effectively than was possible with the prior art devices.

Based upon experiences in using the fluid recovery system described above, it has however been found that the vortex flow created within the container can create operating problems when a pump and centrifugal separator are used. The skimming effect produced by the vortex flow is desired; however, the air core of the fluid vortex and the oil carried on the surface of the air core exiting the tank, enter the pump and separator in quantities disproportionate to that of the heavier contaminated fluid. The air and oil, in the absence of sufficient heavier fluid, combine to create a "butter-like" substance which prevents the operation of the pump and separator at their maximum efficiencies. It is, therefore, necessary to provide a means or device within the container which will not significantly affect the vortex flow but which will transfer into the outlet opening a sufficient amount of heavier contaminated fluid along with the air and surface-carried oil, thus allowing the pump and separator to operate most efficiently.

According to the invention there is provided a vortex generating apparatus including a container for containing fluid, said container having inlet means and outlet means, the inlet means arranged in respect to said outlet so as to create a fluid vortex flow having an air core originating at said outlet, is characterized in that limiter means is arranged near said outlet means for interrupting the air core near the outlet means and for re-developing the interrupted air core, that the limiter means comprises vortex generating means having an opening extending therethrough in coaxial relation to the container, and supporting means for supporting said vortex. Generating means spaced apart from the outlet thereby defining a passage way for flow therethrough of fluid to interrupt said air core, and that said vortex generating means is provided with an open first end, a generally flat ended second end, and side walls tapering generally inward and upward from said first end to said second end and defining said through opening, said vortex generating means, being shaped and configured for regenerating said vortex and allowing said air core to extend upwardly through said opening in an uninterrupted state.

Brief description of the drawings

Figure 1 is a schematic, elevational view of a fluid recovery system with one embodiment of the present invention with portions broken away and shown in cross-section.

Figure 2 is a cross-sectional view of the present invention as seen along lines 2—2 in Figure 1.

Figure 3 is a schematic, elevational view of another fluid recovery system not showing the entire present invention.

Figure 4 is an elevational view of the preferred embodiment of the vortex flow limiting device.

Figure 5 is an elevational view of an alternate embodiment of the vortex flow limiting device.

Figure 6 is a top plan view of the alternate embodiment shown in Figure 5.

Figure 7 is a cross-sectional view of the alternate embodiment as seen along lines 9—9 in Figure 5.

Figure 8 is a cross-sectional view of the alternate embodiment as seen along lines 10—10 in Figure 5.

Figure 9 is a greatly-enlarged cross-sectional view of the vortex flow limiting device shown in Figure 1.

Figure 10 is a greatly-enlarged cross-sectional view of an outlet without a vortex flow limiting device.

Detailed description of the preferred embodiment

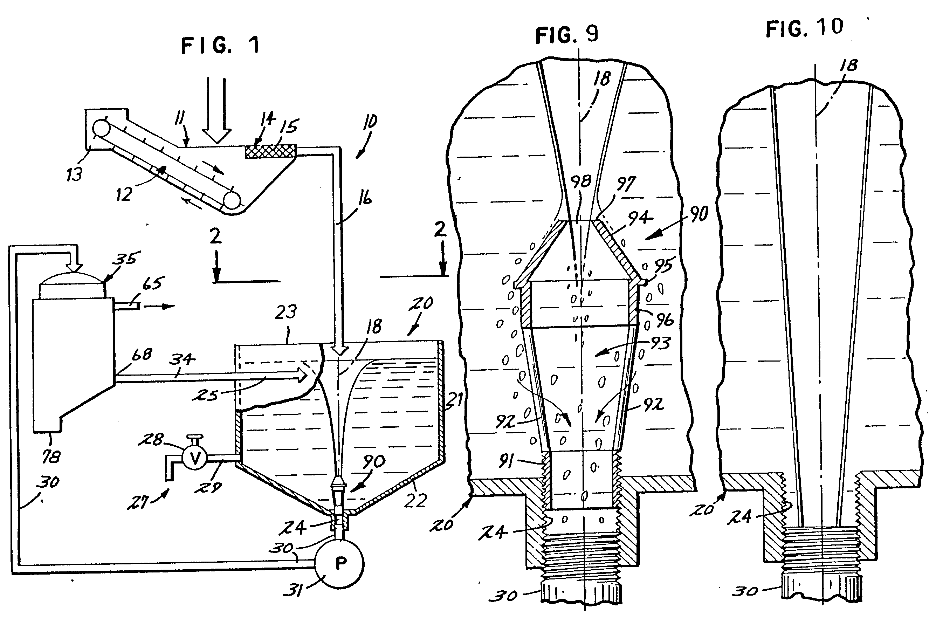

Referring now to the drawings, wherein like reference numerals designate identical or corresponding parts throughout the several views, and more particularly to Figure 1, a recovery system is indicated generally by the reference number 10. A solids dragout arrangement first receives the contaminated fluid mixture into the system 10. The dragout arrangement generally includes a holding tank 11, a standard dragout assembly 12 which removes the solids settling out from the fluid held in the tank 11, and a solids discharge opening 13 through which the "dragged out" solids are removed from the tank 11. The contaminated fluid leaves the tank 11 by overflowing a portion 14 of the tank 11 through a grid-like screen 15 which prevents foreign objects floating on the surface of the mixture from overflowing the tank with the fluid mixture.

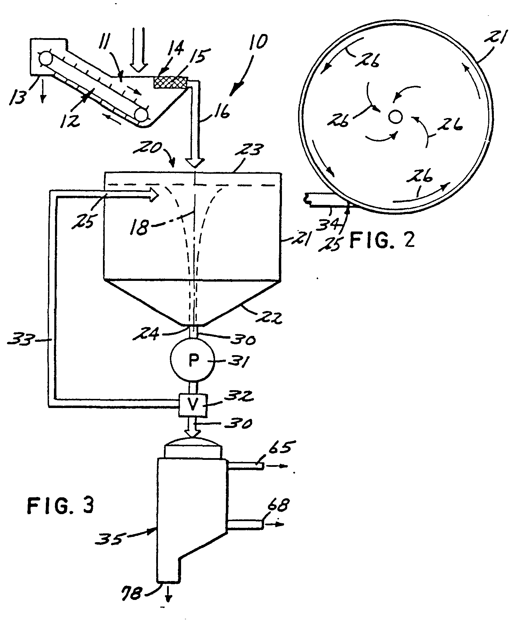

From the drag-out arrangement, the contaminated mixture flows into a recovery container 20 through or along a conduit 16 or other suitable transfer structure. The recovery container 20 in the preferred embodiment has a cylindrical shape with an open top 23 upon which a cover (not shown) can be placed. The bottom portion of the tank is typically frustoconical in shape or a rounded dish shape so that the walls 22 of the container slope downwardly towards a central portion of the container's bottom wall. A circular outlet opening 24 is formed in the central portion of the container's bottom wall. The vertical axis 18 of the container 20 passes through the center of the outlet opening 24. Located along an upper portion of a side 21 of the container 20 is an inlet means 25 which in the preferred embodiment, seen most clearly in Figure 2, is a tube or pipe 34 positioned tangential to the container so that fluid entering the container 20 through the pipe 34 is directed tangentially along the side wall 21 of the container 20. A standard fluid tap 27 is disposed in a lower portion of the container. The tap 27 includes valve 28 and pipe 29, and allows the removal of clarified, recovered coolant fluid from the recovery container 20.

Secured to the container outlet opening 24 is a conduit 30, e.g. pipe or tubing, which receives fluid flow from the container outlet opening 24 and transfers the fluid to a remote location. Disposed in the conduit 30 of the preferred embodiment is a pump 31. The preferred pump 31 is an air-operated diaphragm pump which is capable of transferring a fluid being carried upon the surface of a second fluid without substantial agitation of the fluids or causing a substantial remixing of the two fluids during the transfer.

The conduit 30 transfers the container's discharged fluids with the assistance of the pump 31 to a separator 35 positioned generally above and proximate to the recovery container 20. The separator 35 used is a liquid/liquid/solid centrifugal separator which has an outlet 65 for clarified light liquid and an outlet 68 for separated heavier coolant fluid. The outlet 68 is connected to the conduit 34. The separator 35 also has a ramp-like outlet 78 for purged fluid and solids.

In the system shown in Figure 3, a standard two-way valve 32 is located upstream from the pump 31 in the conduit 30. The valve 32 is operable to return a portion of the container's discharged fluid to the container's inlet means 25 through a suitable conduit 33, e.g. pipe or tubing, while allowing a substantial portion of the fluid to pass through to the conduit 30. Alternately, all of the discharged fluid can be passed through the valve 32 into the conduit 30, thereby preventing any portion of the fluid from returning to the container 20. The system shown in Figure 3 is an alternative connecting arrangement compared with the system in Figure 1, but Figure 3 does not show the entire apparatus according to the invention.

The operation of the system shown in Figure 1 will now be explained.

The contaminated fluid mixture is initially held in the receiving tank 11 where the relatively heavy solids particulate settle out and are removed by the slow-moving drag-out assembly 12 which ultimately discharges the solids particulate in a relatively dry state through the discharge opening 13 into a collection chamber (not shown). Any floating foreign objects are collected along the grid-like screen 15 in the overflow portion 14 of the receiving tank 11 and can subsequently be removed from the tank 11.

As the contaminated fluid mixture overflows the tank 11, it flows into the top portion 23 of the recovery container 20. When the container is partially filled, the pump 31 is turned on thus starting the process of recovering the coolant fluid. The pump draws the fluid mixture out the opening 23 and transfers it to the separator 35 where the separation of mixture is carried on. Separated tramp or free oil is discharged from the separator 35 through outlet means 65 where it is deposited into an oil concentrator (not shown) for further recovery and concentration or into a collection container (not shown) for disposal. During the purge cycle of the separator, the separated solids particulate exit the separator 35 through outlet means 78 where the material is collected and disposed of. More importantly, however, is the route of the recovered coolant fluid which is released from the separator 35 through outlet 68 into conduit 34. Conduit 34 carries the recovered coolant fluid flow into inlet means 25 where the flow enters the tank 20 in a plane substantially perpendicular to the vertical axis 18 and near the liquid surface level of the container's contents, either just below or just above the fluid surface level.

In combination with the downwardly sloping side walls 21 of the container 20 and the bottom outlet opening 24 through which the container's vertical axis 18 passes, the entering tangential flow of the returning coolant fluid imparts a rotational velocity to the container's fluid contents. This rotational velocity in combination with the natural tendency of draining liquid to swirl creates a fluid vortex and whirlpool in the container. See Figure 2. The free oil within the contaminated mixture will naturally separate and rise to the top of the rotating fluid's surface. A direct result, however, of the vortex forces created within the container 20 of the present invention is the quick drawing of all of the surface-collected oil down into the whirlpool's central rotating surface, the air core of the vortex, along the vertical axis 18 and out the outlet opening 24 to the preferred air-operated pump for transfer on to the separator 35 for final separation within the separator 35 where the coolant fluid and surface-collected free oil are further separated and removed from each other.

With reference again to Figure 1, the system is shown to have a vortex flow limiting device 90 within the container 20. It is to be understood that solely for purposes of discussion the system shown in Figure 1 has been chosen to illustrate the placement and operation of the vortex flow limiting device. However, the device is also completely compatible for use in the system shown in Figure 3 and is thus not solely limited to use with any one particular system.

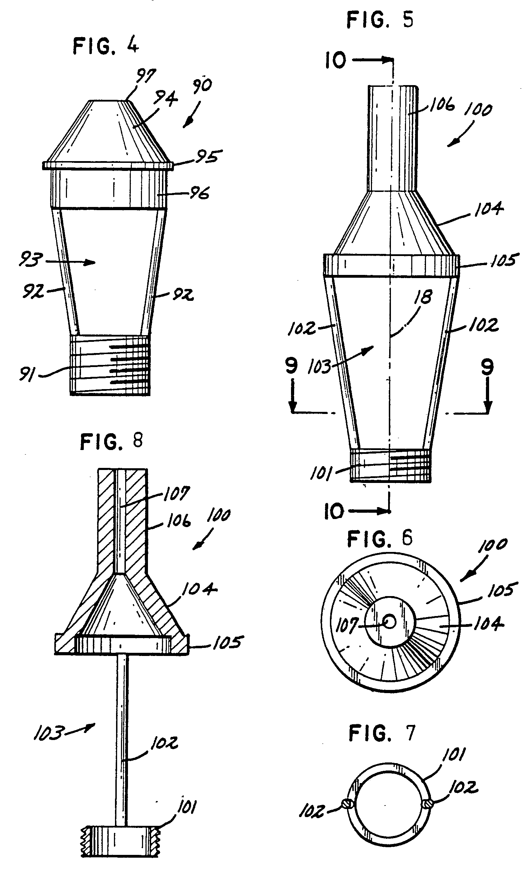

Referring now to Figures 4—8, the structure of the vortex flow limiting device 90, or the "limiter" as it is also called, is disclosed. The limiter 90 is made of any material, i.e., plastic, stainless steel, metal, etc., which will not be subject to chemical attack as a result of contact with the coolant fluid mixture. Two embodiments of the limiter 90, 100 are shown in Figures 4 and 5. The embodiment 90 seen in Figure 4 is generally considered to be the preferred structure for reasons discussed hereinafter.

The limiter 90 in Figure 4 has at its lower end a means (91) for securing the device to the outlet opening of the tank. Although other standard securing means would be possible, the preferred method is to use a threaded tubular member 91 having a diameter substantially equal to that of the outlet opening 24. Extending upwardly from opposing sides of the threaded member is a pair of rod-like legs 92. The opposing leg arrangement provides the connecting means between the lower and upper ends of the device 90. The upper end portion is a vortex generating member 94 which in the preferred embodiment is shaped similar to a truncated cone. A flange 95 and skirt 96 extend downwardly from the lower periphery of the truncated cone and define a portion of a fluid passageway 93. The purpose of the fluid passageway 93 defined by the vortex generating member 94 and the securing means 91 will be discussed below. The legs 92 engage the lower periphery of the skirt portion 96. At the uppermost end of the truncated cone portion 94 is a flat surface 97 having a centrally located opening 98 passing therethrough. See Figure 9. This embodiment is best used with low rotational fluid flows as the truncated cone portion will help redevelop the interrupted air core for passage upwards into the fluid contained above the limiter. Furthermore, this embodiment will not discourage the formation of the otherwise weak vortex air core to the extent the structure of the alternate embodiment might.

Referring now to Figures 5—8, an alternate embodiment 100 for the limiter is illustrated. The securing means 101, the connecting legs 102, and a passageway 103 are constructed as described for similar elements in the preferred embodiment 90 in Figure 4. The difference between the two embodiments is seen in the upper portion of the device 100. The alternate embodiment retains the truncated cone portion 104 and has a flange 105 extending downwardly from its lower periphery to which are secured the legs 102. The difference is in the addition of a neck portion 106 extending upwardly from the top, flat surface of the truncated cone portion. An opening 107 extends completely through the neck 106 and the truncated cone portion 104 as can be seen in Figure 8. This embodiment is used with relatively high rotational flows where the resulting vortex air core is relatively strong and is not easily interrupted.

The generally funnel-shaped design of the vortex generating member 94, 104 allows the vortex to be controlled and directed along the axis 18 of the tank 20. This is desirable as the placement of the tangential inlet 25 at one side of the tank 20 prevents a balanced rotation of the fluid about the tank's vertical axis 18. Such imbalanced rotation creates a drag force which normally causes the resulting vortex air core to "wander" about in the tank 20. With the funnel-shaped design of the limiter member 94, 104, the formation of the vortex air core is controlled and directed along the vertical axis 18, thus eliminating the otherwise natural wandering of the vortex.

With the structure of the limiter disclosed its function and operation can now be understood. As the rotating fluid within the tank 20 develops a certain momentum, the vortex air core competes with the heavier fluid to exit the outlet opening 24. Instead of a continuous feeding of air and surface-carried oil from the tank as illustrated in Figure 10, a more properly proportioned volume of air, oil and heavier fluid becomes possible with the vortex flow limiting device.

The device 90, 100 is secured within the tank by screwing its lower tubular member 91, 101, into the outlet opening 24 of the tank 20. See Figures 1 and 9. As fluid is drawn out of the tank outlet 24 and simultaneously fed into the inlet 25 of the tank, the fluid vortex develops. The creation of the vortex air core begins near the outlet opening 24 and builds upwardly. As can be seen in Figure 9, the passageway 93, 103 in the device 90, 100 allows a rushing inwards of the heavier fluid and a remixing of the surface carried oil and the heavier fluid occurs, causing the "disappearance" or interruption of the vortex air core immediately above the tank outlet 24. A sufficient re-mixing of the mixture components having resulted, the operational requirements of the pump 31 and separator 35 will be satisfied. The vortex generating member 94, 104 develops the vortex air core and helps it to extend upwardly into the remaining fluid in the tank. The member directs the air core through the opening 98, 108 and helps maintain the position of the air core along the vertical axis 18 of the tank 20.

It should be understood that when the air core is not completely interrupted in the open space 93, 103 of the device, the vortex generating member 94, 104 assists the air core in penetrating through to the outlet opening 24 of the tank 20 by guiding the air core along the vertical axis to the center of the outlet opening. However, continuous air core penetration of the outlet opening is prevented by virtue of the fact that the rotating fluid gains in momentum, thus a "surging" of the air core back and forth within the open space of the device results as rotational flows vary. Complete interruption or "disappearance" of the air core occurs less frequently as the rotational flow increases. With low rotational flow, the interruption of the air core is frequent as the vortex air core is weak in such flows and is thus easily destroyed as fluid rushes into the passageway 93, 103 of the device.

Obviously modifications and variations of the present invention are possible in light of the above disclosure. Therefore, it is to be understood that within the scope of the following claims the invention may be practiced otherwise than as specifically described herein.

**Claims**

1. An apparatus for generating a vortex in a fluid including a container (20) for containing fluid, said container (20) having inlet means (25) and outlet means (24), the inlet means (25) arranged in respect to said outlet (24) so as to create a fluid vortex flow having an air core originating at said outlet (24), characterized in that limiter means (90, 100), is arranged near said outlet means (24) for interrupting the air core near the outlet means (24) and for re-developing the interrupted air core, that the limiter means (90, 100) comprises vortex generating means (94, 104) having an opening (98, 107) extending therethrough in coaxial relation to the container (20), and supporting means (92, 102) for supporting said vortex generating means (94, 104) spaced apart from the outlet (24) thereby defining a passage way (93, 103) for flow therethrough of fluid to interrupt said air core, and that said vortex generating means (94, 104) is provided with an open first end (95, 105), a generally flat ended second end (97), and side walls tapering generally inward and upward from said first end to said second end and defining said through opening (98, 107), said vortex generating means (94, 104), being shaped and configured for regenerating said vortex and allowing said air core to extend upwardly through said opening in an uninterrupted state.

2. An apparatus according to claim 1, wherein said supporting means (92, 102) includes a hollow tubular member (91, 101) secured to the outlet opening (24).

3. An apparatus according to claim 2, wherein said supporting means (92, 102) includes at least one rod-like leg connecting said vortex generating member (94, 104) to said tubular member (91, 101).

4. An apparatus according to any of claims 1—3, characterized in that the container (20) comprises walls (21, 22) defining a generally centrally located bottom-most outlet means (24), and that the container (20) has a generally circular cross-section and inlet means (25) for introducing a fluid into said container (20) in a manner to create with said outlet means (24) a fluid vortex, said fluid vortex having a central portion defining a rotation surface extending through said fluid to said outlet means (24).

5. An apparatus according to any of claims 1—4, wherein said supporting means includes a hollow tubular member (91, 101) secured in coaxial relation to said outlet opening (24).

6. An apparatus according to any of claims 1—5, wherein said vortex generating member (104) includes a funnel-like member having an upperneck portion and a lower truncated cone-shaped portion, said neck portion (106) including a central, axial portion having an opening (107), extending therethrough, said lower portion (104) including an upper surface portion having an opening extending therethrough in line with said neck portion opening (107), said lower portion being secured to said rod-like leg (102).

**Patentansprüche**

1. Eine Vorrichtung zum Erzeugen eines Wirbels in einer Flüssigkeit, die einen Behälter (20) zum Einschließen der Flüssigkeit aufweist, wobei der Behälter (20) eine Einlaßvorrichtung (25) und eine Auslaßvorrichtung aufweist, wobei die Einlaßvorrichtung (25) bezüglich des Auslasses (24) angeordnet ist, um einen Flüssigkeitswirbelfluß zu erzeugen, der einen an dem Auslaß (24) entstehenden Luftkern aufweist, dadurch gekennzeichnet, daß eine Begrenzungsvorrichtung (90, 100) in der Nähe der Auslaßvorrichtung (24) angeordnet ist, um den Luftkern in der Nähe der Auslaßvorrichtung (24) zu unterbrechen und um den unterbrochenen Luftkern wiederzuentwickeln, daß die Begrenzungsvorrichtung (90, 100) eine Wirbel erzeugende Vorrichtung (94, 100) aufweist, die eine Öffnung (98, 107), die sich darin in mit dem Behälter (20) koaxalier Richtung ausdehnt, und eine Stützungsvorrichtung (92, 102) aufweist, die die Wirbel erzeugende Vorrichtung von dem Auslaß (24) räumlich getrennt unterstützt und dadurch einen Durchlaß (93, 103) für einen Flüssigkeitsfluß dadurch zum Unterbrechen des Luftkerns abgrenzt, und daß die Wirbel erzeugende Vorrichtung (94, 104) ein offenes erstes Ende (95, 105), ein allgemein abgeflachtes zweites Ende (97) und Seitenwände aufweist, die sich allgemein nach innen und aufwärts neigen von dem ersten Ende zu dem zweiten Ende und diese Öffnung (98, 107) begrenzen, wobei die Wirbel erzeugende Vorrichtung (94, 104) geformt und angeordnet ist, um den Wirbel zu regenerieren und dem Luftkern zu ermöglichen, sich ununterbrochen aufwärts durch die Öffnung zu bewegen.

2. Eine Vorrichtung nach Anspruch 1, wobei die Stützungsvorrichtung (92, 102) ein hohles röhrenförmiges Teil (91, 101) aufweist, das an der Auslaßöffnung (24) befestigt ist.

3. Eine Vorrichtung nach Anspruch 2, wobei die Stützungsvorrichtung (92, 102) wenigstens ein stabförmiges Bein aufweist, das die Wirbel erzeugende Vorrichtung (94, 104) mit dem röhrenförmigen Teil (91, 101) verbindet.

4. Eine Vorrichtung nach einem der Ansprüche 1—3, dadurch gekennzeichnet, daß der Behälter (20) Wände (21, 22) aufweist, die eine allgemein zentral und zuunterst gelegene Auslaßvorrichtung (24) abgrenzen, und daß der Behälter (20) einen allgemein runden Querschnitt und eine Einlaßvorrichtung (25) aufweist, um eine Flüssigket in den Behälter (20) einzuführen, um mit der Auslaßvorrichtung (24) einen Flüssigkeitswirbel zu erzeugen, wobei der Flüssigkeitswirbel einen mittleren Teil aufweist, der eine Rotationsoberfläche definiert, die sich durch die Flüssigkeit zu der Auslaßvorrichtung (24) erstreckt.

5. Eine Vorrichtung nach einem der Ansprüche 1—4, wobei de Unterstützungsvorrichtung ein hohles, röhrenförmiges Teil (91, 101) aufweist, das koaxial bezüglich der Auslaßöffnung (24) befestigt ist.

6. Eine Vorrichtung nach einem der Ansprüche 1—5, wobei das Wirbel erzeugende Teil (104) ein trichterförmiges Teil aufweist, das einen oberen Schulterteil und einen unteren kegelstumpfförmigen Teil aufweist, wobei der Schulterteil (106) einen mittleren, axialen Teil mit einer sich dadurch ejftreckenden Öffnung (107) aufweist, und wobei der untere Teil (104) eine obere Oberfläche mit einer sich dadurch erstreckenden Öffnung, die mit der Schulterteilöffnung (107) fluchtet, aufweist, wobei der untere Teil an das stabförmige Bein (102) befestigt ist.

## Revendications

1. Appareil destiné à générer un tourbillon dans un fluide, comprenant un récipient (20) destiné à contenir un fluide, ledit récipient (20) ayant un moyen d'entrée (25) et un moyen de sortie (24), le moyen d'entrée (25) étant disposé par rapport à ladite sortie (24) de façon à engendrer un écoulement tourbillonnaire de fluide ayant un coeur d'air prenant naissance à ladite sortie (24), caractérisé en ce que des moyens limiteurs (90, 100) sont disposés à proximité dudit moyen de sortie (24) pour interrompre le coeur d'air à proximité des moyens de sortie (24) et pour redévelopper le coeur d'air interrompu, en ce que les moyens limiteurs (90, 100) comprenant des moyens (94, 104) de génération de tourbillon ayant une ouverture (98, 107) qui les traverse coaxialement au récipient (20), et des moyens de support (92, 102) destinés à supporter lesdits moyens (94, 104) de génération de tourbillon à l'écart de la sortie (24) afin de définir un passage (93, 103) pour l'écoulement d'un fluide afin d'interrompre ledit coeur d'air, et en ce que lesdits moyens (94, 104) de génération de tourbillon présentent une première extrémité ouverte (95, 105), une seconde extrémité (97) à bout globalement plat et des parois latérales s'inclinant globalement vers le haut de ladite première extrémité vers ladite seconde extrémité et définissant ladite ouverture traversante (98, 107), lesdits moyens (94, 104) de génération de tourbillon étant façonnés et configurés pour régénérer ledit tourbillon et permettre audit coeur d'air de s'élever à travers ladite ouverture dans un état ininterrompu.

2. Appareil selon la revendication 1, dans lequel lesdits moyens de support (92, 102) comprennent un élément tubulaire creux (91, 101) fixé à l'ouverture de sortie (24).

3. Appareil selon la revendication 2, dans lequel lesdits moyens de support (92, 102) comprennent au moins une branche analogue à une tige reliant ledit élément (94, 104) de génération de tourbillon audit élément tubulaire (91, 101).

4. Appareil selon l'une quelconque des revendications 1—3, caractérisé en ce que le récipient (20) comprend des parois (21, 22) définissant un moyen de sortie (24) au plus bas, situé globalement centralement, et en ce que le récipient (20) présente une section transversale globalement circulaire et un moyen d'entrée (25) pour l'introduction d'un fluide dans ledit récipient (20) de manière à engendrer avec ledit moyen de sortie (24) un tourbillon de fluide, ledit tourbillon de fluide ayant une partie centrale définissant une surface de rotation s'étendant à travers ledit fluide jusqu'audit moyen de sortie (24).

5. Appareil selon l'une quelconque des revendications 1—4, dans lequel lesdits moyens de support comprennent un élément tubulaire creux (91, 101) fixé coaxialement à ladite ouverture de sortie (24).

6. Appareil selon l'une quelconque des revendications 1—5, dans lequel ledit élément (104) de génération de tourbillon comprend un élément analogue à un entonnoir ayant une partie de col supérieure et une partie inférieure en forme de cône tronqué, ladite partie de col (106) comprenant une portion axiale centrale ayant une ouverture (107) s'étendant à travers elle, ladite partie inférieure (104) présentant une portion de surface supérieure à travers laquelle s'étend une ouverture en alignement avec ladite ouverture (107) de la partie de col, ladite partie inférieure étant fixée à ladite branche (102) analogue à une tige.

FIG. 10

FIG. 9

FIG. 1

EP 0 069 119 B1

FIG. 2

FIG. 3

FIG. 4

FIG. 5

FIG. 8

FIG. 6

FIG. 7